# EUROPÄISCHE PATENTSCHRIFT

(11) **EP 2 281 267 B1**
(45) Veröffentlichungstag und Bekanntmachung des Hinweises auf die Patenterteilung: **27.06.2012**
(21) Anmeldenummer: 09749578.2
(22) Anmeldetag: 14.05.2009
(51) Int. Cl.: G06K 19/077

(54) **CHIPKARTE MIT EINER MEHRZAHL VON KOMPONENTEN**
CHIP CARD HAVING A PLURALITY OF COMPONENTS
CARTE À PUCE PRÉSENTANT UNE PLURALITÉ DE COMPOSANTS

(30) Priorität: 23.05.2008 DE 102008024823
(43) Veröffentlichungstag der Anmeldung: 09.02.2011
(73) Patentinhaber: Smartrac IP B.V., 1077 XX Amsterdam (NL)
(72) Erfinder: RIETZLER, Manfred, 87616 Marktoberdorf (DE); FREEMAN, Raymond, Mesa AZ 85213 (US)
(74) Vertreter: von den Steinen, Axel
(86) Internationale Anmeldenummer: PCT/EP2009/003417
(87) Internationale Veröffentlichungsnummer: WO 2009/141088

(56) Entgegenhaltungen:
- EP-A- 1 411 466
- DE-A1- 19 611 237
- DE-A1-102004 042 145

## Beschreibung

Die vorliegende Erfindung betrifft eine Chipkarte mit einem in einem Kartenkörper angeordneten Chip und einer Mehrzahl vermittels einer Verbindungsleiteranordnung elektrisch leitend mit dem Chip verbundenen Komponenten. Des weiteren betrifft die Erfindung ein Verfahren zur Herstellung einer Chipkarte.

Chipkarten der eingangs genannten Art sind in unterschiedlichen Ausführungsformen bekannt, die sich insbesondere durch die Art und Anzahl der in der Chipkarte enthaltenen Komponenten unterscheiden. Beispielsweise ist es bekannt, derartige Chipkarten als so genannte "aktive" Karten auszuführen, die eine in den Kartenkörper integrierte Energieversorgungseinheit, etwa eine Batterie, aufweisen die über eine Verbindungsleiteranordnung elektrisch leitend mit dem Chip verbunden ist und den Chip sowie beispielsweise eine außer dem Chip im Kartenkörper vorgesehene Anzeigeeinrichtung mit der notwendigen Betriebsspannung versorgt.

Weiterhin sind auch "passive" Chipkarten bekannt, die den Chip in einer Transponderanordnung mit einer Antenneneinrichtung aufweisen, welche zur Versorgung des Chips mit einer von einer außerhalb des Kartenkörpers angeordneten Energiequelle stammenden Energie und zur Datenübertragung dient. Dabei kann der Chip unmittelbar mit der Antenneneinrichtung kontaktiert sein oder vermittels einer Verbindungsleiteranordnung an die Antenneneinrichtung angeschlossen sein, wobei die Verbindungsleiteranordnung gegebenenfalls zur Verbindung des Chips mit weiteren Komponenten, wie beispielsweise einer Anzeigeeinrichtung, dient.

Neben den vorstehend beispielhaft genannten Komponenten, die in demselben Kartenkörper wie der Chip angeordnet sind und mit dem Chip über eine Verbindungsleiterordnung verbunden sind, sind je nach dem für die Chipkarte geforderten Leistungsprofil eine Vielzahl anderer Komponenten bekannt, wie beispielsweise ein Lautsprecher oder ein Schalter, die über die Verbindungsleiteranordnung mit dem Chip kontaktierbar sind.

Je nach Anzahl der in einem Kartenkörper angeordneten Komponenten kann es somit zu einer insgesamt komplexen Verbindungsleiterstruktur im Kartenköper kommen, die zum einen die Herstellung einer betriebssicheren Chipkarte erschwert und insbesondere bei einem Kartenkörper, der aus einer Mehrzahl von in einem Lagenverbund angeordneten Substratlagen zusammengesetzt ist, ein häufig sich änderndes Design der einzelnen Substratlagen erforderlich macht.

In der Praxis führen die Komplexität der Verbindungsleiterstruktur im Kartenkörper und die sich aus unterschiedlichen Leistungsprofilen der Chipkarten ergebenden Änderungen im Lagendesign zu einem entsprechenden Fertigungsaufwand mit den damit verbundenen Kosten.

Aus der DE 196 11 237 A1 ist eine Chipkarte bekannt, die eine auf einem monolithischen Kartenkörper aufgebrachte Kontaktfolie aufweist, auf der ein Chip und weitere Komponenten der Chipkarte angeordnet sind, welche über eine auf der Kontaktfolie ausgebildete Leiterbahnstruktur miteinander kontaktiert sind.

Die EP-A-1 411 466 zeigt eine Chipkarte mit einem Leiterbahninlett, das eine Leiterbahnstruktur aufweist und auf dem ein Chip sowie weitere Komponenten der Chipkarte angeordnet sind.

Aus der DE 10 2004 042 145 A1 ist eine als Laminatverbund ausgebildete Chipkarte mit einer Mehrzahl von Substratlagen bekannt, die ein Versteifungselement mit einer Leiterbahnstruktur aufweist, wobei das Versteifungselement gleichzeitig als Substrat für den Chip dient.

Der vorliegenden Erfindung liegt daher die Aufgabe zugrunde, einen Aufbau sowie ein Herstellungsverfahren für eine Chipkarte vorzuschla-gen, der bzw. das die Herstellung von Chipkarten mit unterschiedlichen Leistungsprofilen vereinfacht.

Zur Lösung dieser Aufgabe weist die erfindungsgemäße Chipkarte die Merkmale des Anspruchs 1 auf.

Bei der erfindungsgemäßen Chipkarte sind die Komponenten und die Verbindungsleiteranordnung auf unterschiedlichen Substratlagen, nämlich eine Komponentenlagenordnung und eine Verbindungslagenanordnung, angeordnet und weisen zur Herstellung einer elektrisch leitfähigen Kontaktierung in Überdeckung miteinander angeordnete Kontaktflächen auf.

Der erfindungsgemäße Chipkartenaufbau ermöglicht somit einen entsprechend dem gewünschten Leistungsprofil der Chipkarte definierten, modularen Aufbau aus standardisierten Substratlagen, die entsprechend dem gewünschten Leistungsprofil der Chipkarte miteinander kombiniert werden.

Wenn die Verbindungslagenanordnung eine Mehrzahl von Verbindungslagen aufweist, die jeweils mit einem Verbindungsleitermodul versehen sind, derart, dass die über Kontaktflächen miteinander kontaktierten Verbindungsleitermodule die Verbindungsleiteranordnung ausbilden, ist es möglich, bereits die Verbindungsleiteranordnung entsprechend dem gewünschten Leistungsprofil der Chipkarte modular aus einzelnen Verbindungslagen aufzubauen.

In einer bevorzugten Ausführungsform der Chipkarte ist die Verbindungslagenanordnung mit einer Komponentenlagenanordnung aus einer oder mehreren Komponentenlagen versehen, die eine Ausgabe- oder Eingabeeinrichtung sowie eine Energieversorgungseinrichtung für den Chip aufweist.

Wenn die Ausgabe- oder Eingabeeinrichtung in einer ersten Komponentenlage und die Energieversorgungseinrichtung in einer zweiten Komponentenlage angeordnet ist, ist es möglich, die zugeordnete Komponentenlage in ihrer Gesamtheit zur Anordnung bzw. Ausbildung der Energieversorgungseinrichtung zu nutzen, so dass beispielsweise Batterieeinrichtungen ermöglicht werden, die sich über die gesamte Oberfläche der Substratlage erstrecken und daher eine entsprechende Kapazität aufweisen können.

Besonders vorteilhaft ist es, wenn die Verbindungslagenanordnung zwischen den Komponentenlagen angeordnet ist, so dass zwischen den Kontaktflächen der in den Komponentenlagen angeordneten Komponenten und den Kontaktflächen der Verbindungsleiteranordnung eine unmittelbare Kontaktierung erfolgen kann.

Insbesondere bei einer großen Anzahl von Komponenten mit einer entsprechenden Anzahl von Komponentenlagen ist es vorteilhaft, wenn die Verbindungslagen der Verbindungslagenanordnung und die Komponentenlagen der Komponentenlagenanordnung alternierend aufeinander angeordnet sind.

Je nach Art der in einer Chipkarte miteinander kombinierten Komponenten kann es auch vorteilhaft sein, die Komponenten zumindest anteilig in Komponentengruppen in einer gemeinsamen Gruppen-Komponentenlage anzuordnen, also beispielsweise eine Anzeigeeinrichtung und einen die Anzeigeeinrichtung aktivierenden Druckschalter.

In anderen Fällen, wie insbesondere in dem Fall der Verwendung einer Batterieeinrichtung als Komponente, kann es sich auch als vorteilhaft erweisen, wenn die Komponenten zumindest teilweise als einzelne Komponenten in Einzelkomponentenlagen angeordnet sind.

Wenn die Komponenten sich zumindest teilweise über mehrere benachbarte Komponentenlagen erstrecken, ist es möglich, auch in einem aus einzelnen Substratlagen gebildeten Schichtaufbau größere Komponenten, wie beispielsweise ein Chipmodul unterzubringen, derart, dass der mit einer Anschlusskontaktierung versehene Chipträger des Chipmoduls in einer Komponentenlage und der mit einem Verguss versehene Chip in einer weiteren Komponentenlage untergebracht ist.

Vorzugsweise sind die Komponenten in Komponentenaufnahmen angeordnet sind, die aus zumindest einer in einer oder mehreren Komponentenlagen angeordneten Fensteröffnungen gebildet sind, so dass die Komponentenaufnahmen in ihrer Größe leicht angepasst werden können.

Wenn die Fensteröffnungen mit einem Füllmaterial versehen sind, können Hohlräume im Kartenkörper vermieden werden.

Vorzugsweise ist das Füllmaterial aus einem thermisch aktivierbaren Klebermaterial gebildet, so dass auch bei vergleichsweise niedrigen Laminierungstemperaturen ein sicherer Lagenverbund auch im bereich der Fensteröffnungen erreicht wird.

Wenn zwischen den die Verbindungslagen und die Komponentenlagen bildenden Substratlagen eine thermisch aktivierbare Kleberschicht vorgesehen ist, kann die Herstellung des Kartenkörpers im Laminierverfahren insgesamt bei vergleichsweise niedrigen Laminierungstemperaturen im Rahmen einer so genannten "Warmlamination" erfolgen.

Zur Lösung der Aufgabe weist das erfindungsgemäße Verfahren die Merkmale des Anspruchs 14 auf.

Erfindungsgemäß wird in einem ersten Verfahrensschritt der Kartenkörpers als Laminataufbau mit einer Mehrzahl von in einem Laminatverbund miteinander verbundenen Komponentenlagen und Verbindungslagen hergestellt. Erst anschließend werden in einem weiteren Laminierschritt auf den Kartenkörper Decklagen aufgebracht. Auf diese Art und Weise können ausgehend von einem als neutrale Funktionseinheit aufgebauten Kartenkörper durch nachträgliche Aufbringung von beispielsweise mit einer Bedruckung versehenen Decklagen individualisierte Chipkarten hergestellt werden.

Nachfolgend werden bevorzugte Ausführungsformen der Chipkarte anhand der Zeichnungen näher erläutert.

Es zeigen:
- **Fig. 1**: einen Lagenaufbau für eine Chipkarte in einer ersten Ausführungsform;
- **Fig. 1A**: die aus dem Lagenaufbau hergestellte Chipkarte;
- **Fig. 2**: einen Lagenaufbau für eine Chipkarte in einer zweiten Ausführungsform;
- **Fig. 3**: einen Lagenaufbau für eine Chipkarte in einer dritten Ausführungsform;
- **Fig. 4**: einen Lagenaufbau für eine Chipkarte in einer vierten Ausführungsform.

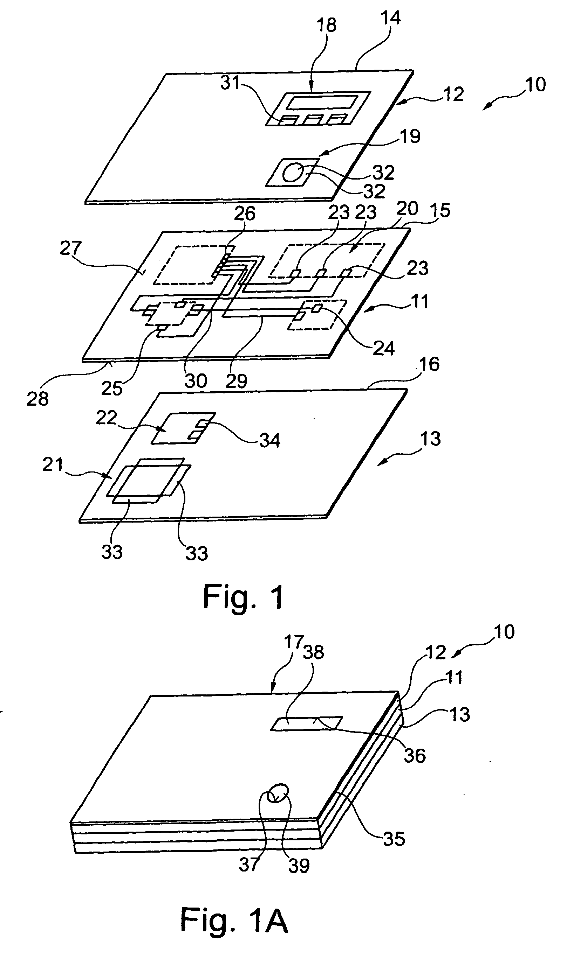

**Fig. 1** zeigt einen Lagenaufbau für eine Chipkarte 10 mit einer Verbindungsleiterlage 11, die als Zwischenlage zwischen einer oberen Komponentenlage 12 und einer unteren Komponentenlage 13 angeordnet ist. Die Verbindungsleiterlage 11 und die Komponentenlagen 12, 13 weisen im Falle des vorliegenden Ausführungsbeispiels aus PVC oder PC gebildete Substrate 14, 15 und 16 auf, die zur Herstellung der Chipkarte 10 in einem an sich bekannten Laminiervorgang flächig miteinander verbunden werden und somit einen durch den Lagenverbund entstandenen Kartenkörper 17 ausbilden, wie in **Fig. 1A** dargestelt..

Bei dem in **Fig. 1** dargestellten Ausführungsbeispiel weist die obere Komponentenlage 12 eine, hier als "Segment-Display" ausgebildete Anzeigeeinrichtung 18 sowie einen Drucktaster 19 auf, die über eine in der Verbindungsleiterlage 11 ausgebildete Verbindungsleiteranordnung 20 mit einem Chip 21 und einer Batterieeinrichtung 22 kontaktiert sind, die auf dem Substrat 16 der unteren Komponentenlage 13 angeordnet sind.

Die Verbindungsleiteranordnung 20 der Verbindungsleiterlage 11 ist bei dem in **Fig. 1** dargestellten Beispiel als eine Drahtleiteranordnung mit Drahtleitern 29 ausgebildet, die an ihren Enden den hier als Anzeigeeinrichtung 18, Drucktaster 19, Chip 21 und Batterieeinrichtung 22 ausgebildeten Komponenten jeweils zugeordnete Kontaktflächen 23, 24, 25 und 26 aufweisen. Im vorliegenden Fall sind die Kontaktflächen 23, 24, 25 und 26 als Durchkontaktierungen ausgebildet, die sowohl auf einer Oberseite 27 als auch auf einer Unterseite 28 der Verbindungsleiterlage 11 zugängig sind. Die Drahtleiter 29 sind im Fall des vorliegenden Ausführungsbeispiels mit einer isolierenden Umhüllung versehen, so dass die Ausbildung von Leiterbrücken 30 ohne die Gefahr von Kurzschlüssen möglich ist.

Wie **Fig. 1** zeigt, sind die in den Komponentenlagen 12 und 13 angeordneten, hier als Anzeigeeinrichtung 18, Drucktaster 19, Chip 21 und Batterieeinrichtung 22 ausgebildeten Komponenten mit Kontaktflächen 31, 32, 33 und 34 versehen, die so auf den Komponentenlagen 12, 13 angeordnet sind, dass sie sich in einer Überdeckungslage mit den Kontaktflächen 23 bis 26 der Verbindungsleiteranordnung 20 befinden und sich somit infolge einer Herstellung des in **Fig. 1A** dargestellten, als Lagenverbund ausgebildeten Kartenkörpers 17 eine direkte Kontaktierung zwischen den Kontaktflächen 23 bis 26 der Komponenten (Anzeigeeinrichtung 18, Drucktaster 19, Chip 21, Batterieeinrichtung 22) und den Kontaktflächen 31 bis 34 der Verbindungsleiteranordnung 20 ergibt, so dass die zum Betrieb der Chipkarte 10 notwendige Verbindungsleiterstruktur geschaffen ist.

Wie **Fig. 1A** zeigt, kann der Kartenkörper 17 mit einer ergänzenden Decklage 35 versehen sein, die zwei Fensteröffnungen 36, 37 aufweist, welche derart angeordnet sind, dass die Anzeigeeinrichtung 18 und der Drucktaster 19 soweit abgedeckt sind, dass lediglich ein Anzeigefeld 38 und eine Taste 39 von außen her zugänglich bzw. sichtbar ist. Ebenso ist es möglich, die Decklage transparent und ohne Fensteröffnung auszubilden.

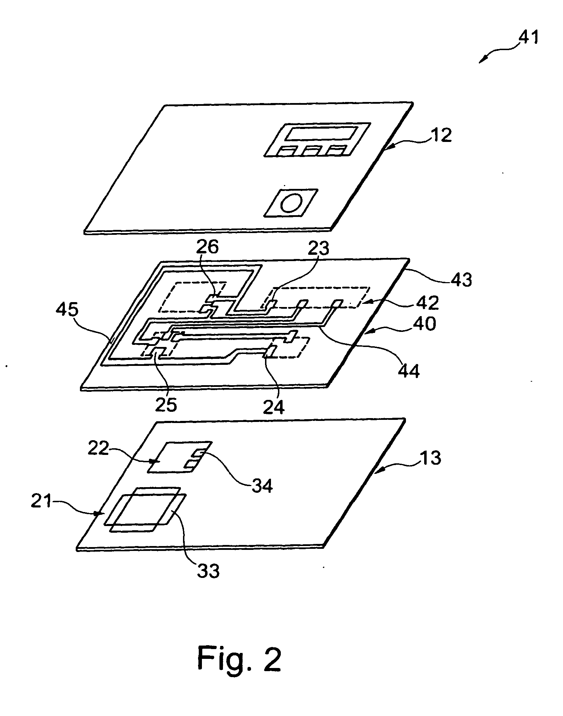

**Fig. 2** zeigt einen aus zwei Komponentenlagen 12, 13 und einer Verbindungsleiterlage 40 zusammengesetzten Aufbau für eine Chipkarte 41. Entsprechend ihrer übereinstimmenden Bezugszeichenbenennung sind die Komponentenlagen 12, 13 der Chipkarte 41 identisch mit den Komponentenlagen 12, 13 der Chipkarte 10 ausgebildet.

Im Unterschied zu der in **Fig. 1** dargestellten Chipkarte 10 ist eine auf der Verbindungsleiterlage 40 ausgebildeten Verbindungsleiteranordnung 42 nicht mit Drahtleitern 29 ausgebildet. Vielmehr weist die Verbindungsleiteranordnung 42 eine auf einem Substrat 43 aufgebrachte Metallisierungsstruktur 44 auf, die beispielsweise in einem Metallabscheideverfahren oder in Ätztechnik auf einer Oberseite 45 des Substrats 43 erzeugt werden kann. Übereinstimmend mit der Verbindungsleiteranordnung 20 der in **Fig. 1** dargestellten Chipkarte 10 weist die vermittels einer Metallisierungsstruktur 44 ausgebildete Verbindungsleiteranordnung 42 Kontaktflächen 31 bis 34 auf, die in der bereits unter Bezug auf die **Fig. 1** erörterten Art und Weise den Kontaktflächen 23 bis 26 der hier ebenfalls als Anzeigeeinrichtung 18, Drucktaster 19, Chip 21 und Batterieeinrichtung 22 ausgebildeten Komponenten der Komponentenlagen 12, 13 zugeordnet sind.

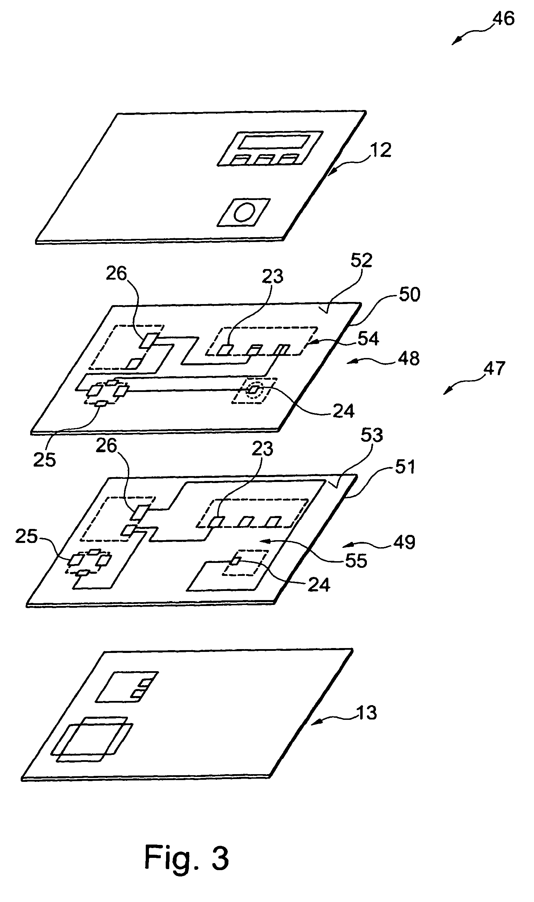

**Fig. 3** zeigt einen Aufbau einer Chipkarte 46, die entsprechend der übereinstimmenden Bezugszeichenbenennung Komponentenlagen 12, 13 aufweist, die mit den Komponentenlagen 12, 13 der in den **Fig. 1** und .**2** dargestellten Chipkarten 10 und 41 übereinstimmen. Im Unterschied zu den Chipkarten 10 und 41 weist der Aufbau der Chipkarte 46 eine Verbindungsleiterlagenanordnung 47 auf, die modular aus zwei Verbindungsleiterlagen 48 und 49 zusammengesetzt ist. Die Verbindungsleiterlagen 48 und 49 weisen Verbindungsleitermodule 54, 55 mit jeweils deckungsgleich angeordneten Kontaktflächen 23 bis 26 auf, die als Durchkontaktierungen in einem Substrat 50 der Verbindungsleiterlage 48 und einem Substrat 51 der Verbindungsleiterlage 49 ausgebildet sind. Die jeweils auf einer Oberseite 52 bzw. 53 der Substrate 50 bzw. 51 ausgebildeten Verbindungsleitermodule 54 und 55 sind so angeordnet, dass bei einer Kontaktierung der Kontaktflächen 23 bis 26 der Verbindungsleiterlagen 48 und 49 miteinander eine mit der in **Fig. 1** dargestellten Verbindungsleiteranordnung 20 elektrisch gleichwirkende Verbindungsleiteranordnung 47 geschaffen ist. Da das Substrat 50 der in **Fig. 3** oberhalb der Verbindungsleiterlage 49 angeordneten Verbindungsleiterlage 48 als elektrische Isolierung wirkt, können beide jeweils auf den Verbindungsleiterlagen 48 und 49 angeordnete Verbindungsleitermodule 54 und 55 beliebig, also insbesondere auch ohne Isolierung, ausgebildet sein. Somit können die Verbindungsleitermodule 54 und 55 beispielsweise als isolierter oder auch unisolierter Drahtleiter oder auch als Metallisierung, wie etwa die Verbindungsleiteranordnung 42 der in **Fig. 2** dargestellten Chipkarte 41, ausgebildet sein.

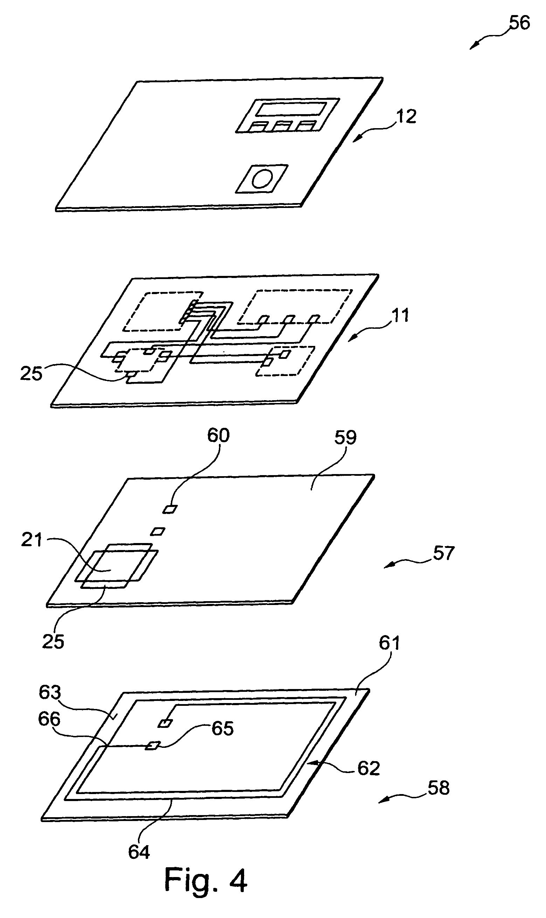

**Fig. 4** zeigt den Aufbau einer als "Passivkarte" ausgebildeten Chipkarte 56, die im Falle des in **Fig. 4** dargestellten Ausführungsbeispiels in Übereinstimmung mit der in **Fig. 1** dargestellten Chipkarte 10 eine obere Komponentenlage 12 mit einer Anzeigeeinrichtung 18 und einem Drucktaster 19 sowie eine Verbindungsleiterlage 11 mit einer darauf ausgebildeten Verbindungsleiteranordnung 20 aufweist, die mit Kontaktflächen 23 bis 26 versehen ist.

Im Unterschied zu der in **Fig. 1** dargestellten Chipkarte 10 weist der Aufbau der Chipkarte 56 zwei weitere Komponentenlagen 57 und 58 auf. Die Komponentenlage 57 weist auf einem Substrat 59 angeordnet einen Chip 21 mit Kontaktflächen 25 sowie zwei als Durchkontaktierungen ausgebildete Kontaktflächen 60 auf.

Die Komponentenlage 58 weist auf einem Substrat 61 eine Antenneneinrichtung 62 auf, die im vorliegenden Fall aus einer in eine Oberfläche 63 des Substrats 61 eingebetteten Drahtspule 64 mit an Enden der Drahtspule 64 ausgebildeten Antennenkontaktflächen 65 gebildet ist. Obwohl hier als Drahtspule 64 ausgebildet, kann die Antenneneinrichtung 62 auch durch eine auf die Oberfläche 63 des Substrats 61 aufgebrachte Metallisierung gebildet sein, die beispielsweise auch entsprechend der in **Fig. 3** dargestellten, modular aufgebauten Verbindungsleiteranordnung 47 zur Vermeidung einer Leiterbrücke 66 modular aus zwei auf unterschiedlichen Substraten angeordneten Antennenmodulen aufgebaut sein kann.

Da die Kontaktflächen 60 der Komponentenlage 57 in Überdeckung mit den Antennenkontaktflächen 65 der Komponentenlage 58 und die Kontaktflächen 25 des Chips 21 auf der Komponentenlage 57 in Überdeckung mit den Kontaktflächen 25 der Verbindungslage 11 angeordnet sind, ergibt sich eine im Prinzip mit der in **Fig. 1** dargestellten Verbindungsleiterstruktur der Chipkarte 10 übereinstimmende Verbindungsleiterstruktur, wobei schaltungstechnisch die Batterieeinrichtung 22 gegen die Antenneneinrichtung 62 ausgetauscht ist.

## Patentansprüche

1. Chipkarte mit einem in einem Kartenkörper (17) angeordneten Chip (21) und einer Mehrzahl vermittels einer Leiteranordnung (20, 42, 47) elektrisch leitend mit dem Chip verbundenen Komponenten (18, 19, 22, 62),
**dadurch gekennzeichnet,**
**dass** der Kartenkörper aus einer Mehrzahl von in einem Laminiervorgang flächig miteinander verbundenen Substratlagen (11, 12, 13, 40, 48, 49, 57, 58) zusammengesetzt ist, und dass die Komponenten und die Leiterbahnanordnung auf unterschiedlichen Substratlagen, nämlich einer Komponentenlagenanordnung und einer Verbindungslagenanordnung, angeordnet sind und zur Herstellung einer elektrisch leitfähigen Kontaktierung in Überdeckung miteinander angeordnete Kontaktflächen (23, 24, 25, 26, 31, 32, 33, 34, 60, 65) aufweisen.

2. Chipkarte nach Anspruch 1,
**dadurch gekennzeichnet,**
**dass** die Verbindungslagenanordnung eine Mehrzahl von Verbindungslagen (48, 49) aufweist, die jeweils mit einem Verbindungsleitermodul (54, 55) versehen sind, derart, dass die über Kontaktflächen miteinander kontaktierten Verbindungsleitermodule die Verbindungsleiteranordnung ausbilden.

3. Chipkarte nach einem der vorangehenden Ansprüche,
**dadurch gekennzeichnet,**
**dass** die Verbindungslagenanordnung (20, 42, 47) mit einer Komponentenlagenanordnung aus einer oder mehreren Komponentenlagen (12, 13, 57, 58) versehen ist, die mit einer Ausgabe- oder Eingabeeinrichtung (18) sowie einer Energieversorgungseinrichtung (22) für den Chip (21) versehen ist.

4. Chipkarte nach Anspruch 3,
**dadurch gekennzeichnet,**
**dass** die Ausgabe- oder Eingabeeinrichtung (18) in einer ersten Komponentenlage (12) und die Energieversorgungseinrichtung (22) in einer zweiten Komponentenlage (13) angeordnet ist.

5. Chipkarte nach Anspruch 4,
**dadurch gekennzeichnet,**
**dass** die Verbindungslagenanordnung (11, 40, 48, 49) zwischen den Komponentenlagen (12, 13, 57, 58) angeordnet ist.

6. Chipkarte nach Anspruch 4,
**dadurch gekennzeichnet,**
**dass** die Verbindungslagen (11, 40, 48, 49) der Verbindungslagenanordnung und die Komponentenlagen (12, 13, 57, 58) der Komponentenlagenanordnung alternierend aufeinander angeordnet sind.

7. Chipkarte nach einem der vorangehenden Ansprüche,
**dadurch gekennzeichnet,**
**dass** die Komponenten (18, 19, 21, 22, 62) zumindest anteilig in Komponentengruppen in einer gemeinsamen Gruppen-Komponentenlage angeordnet sind.

8. Chipkarte nach einem der vorangehenden Ansprüche,
**dadurch gekennzeichnet,**
**dass** die Komponenten (18, 19, 21, 22, 62) zumindest teilweise als einzelne Komponenten in Einzelkomponentenlagen angeordnet sind.

9. Chipkarte nach einem der vorangehenden Ansprüche,
**dadurch gekennzeichnet,**
**dass** die Komponenten sich zumindest teilweise über mehrere benachbarte Komponentenlagen erstrecken.

10. Chipkarte nach einem der vorangehenden Ansprüche,
**dadurch gekennzeichnet,**
**dass** die Komponenten in Komponentenaufnahmen angeordnet sind, die aus zumindest einer in einer oder mehreren Komponentenlagen angeordneten Fensteröffnungen gebildet sind.

11. Chipkarte nach Anspruch 10,
**dadurch gekennzeichnet,**
**dass** die Fensteröffnungen mit einem Füllmaterial versehen sind.

12. Chipkarte nach Anspruch 11,
**dadurch gekennzeichnet,**
**dass** das Füllmaterial aus einem thermisch aktivierbaren Klebermaterial gebildet ist.

13. Chipkarte nach einem der vorangehenden Ansprüche,
**dadurch gekennzeichnet,**
**dass** zwischen den die Verbindungslagen (11, 40, 48, 49) und die Komponentenlagen (12, 13, 57, 58) bildenden Substratlagen eine thermisch aktivierbare Kleberschicht vorgesehen ist.

14. herfahren zur Herstellung einer Chipkarte mit einem in einem Kartenkörper (17) angeordneten Chip (21) und einer Mehrzahl vermittels einer Leiteranordnung (20, 42, 47) elektrisch leitend mit dem Chip verbundenen Komponenten (18, 19, 22, 62) nach einem oder mehreren der Ansprüche 1 bis 13,
**dadurch gekennzeichnet,**
**dass** bei Herstellung des Kartenkörpers (17) als Laminataufbau mit einer Mehrzahl von in einem Laminatverbund miteinander verbundenen Komponentenlagen (12, 13, 57, 58) und Verbindungslagen (11, 40, 48, 49) die Komponenten über die Verbindungslagen derart verbunden werden, dass die Verbindungslagen mit einer die Komponenten bereits enthaltenen Komponentenlage laminiert werden, und dabei die elektrischen Verbindungen vermittels entsprechend übereinander liegender Kontakte erfolgen, und in einem weiteren Laminierschritt Decklagen (35) auf den Kartenkörper aufgebracht werden.

## Claims

1. Chip card having a chip (21) which is arranged in a card body (17), and having a plurality of components (18, 19, 22, 62) being electrically conductively connected to the chip by means of a conductor arrangement (20, 42, 47),
**characterized in that**
the card body is composed of a plurality of substrate layers (11, 12, 13, 40, 48, 49, 57, 58) which are planarly connected with one another in a lamination process, and the components and the conductor arrangement are arranged on different substrate layers, specifically a component layer arrangement and a connecting layer arrangement, and have contact surfaces (23, 24, 25, 26, 31, 32, 33, 34, 60, 65), which are disposed so as to overlap one another, for producing an electrically conductive contacting.

2. Chip card according to claim 1,
**characterized in that**
the connecting layer arrangement features a plurality of connecting layers (48, 49), which are each provided with a connecting conductor module (54, 55), in such a manner that the connecting conductor modules being contacted with one another via contact surfaces form the connecting conductor arrangement.

3. Chip card according to any of the preceding claims,
**characterized in that**
the connecting layer arrangement (20, 42, 47) is provided with a component layer arrangement composed of one or several component layers (12, 13, 57, 58) and being provided with an output device or an input device (18) as well as an energy supply device (22) for the chip (21).

4. Chip card according to claim 3,
**characterized in that**
the output device or the input device (18) is arranged in a first component layer (12) and the energy supply device (22) is arranged in a second component layer (13).

5. Chip card according to claim 4,
**characterized in that**
the connecting layer arrangement (11, 40, 48, 49) is arranged between the component layers (12, 13, 57, 58).

6. Chip card according to claim 4,
**characterized in that**
the connecting layers (11, 40, 48, 49) of the connecting layer arrangement and the component layers (12, 13, 57, 58) of the component layer arrangement are alternately disposed on top of one another.

7. Chip card according to any of the preceding claims,
**characterized in that**
the components (18, 19, 21, 22, 62) are at least partially arranged in component groups in a common group component layer.

8. Chip card according to any of the preceding claims,
**characterized in that**
the components (18, 19, 21, 22, 62) are at least partially arranged as individual components in individual component layers.

9. Chip card according to any of the preceding claims,
**characterized in that**
the components extend at least partially over several adjacent component layers.

10. Chip card according to any of the preceding claims,
**characterized in that**
the components are arranged in component recesses which are formed of at least one window opening being arranged in one or more component layers.

11. Chip card according to claim 10,
**characterized in that**
the window openings are provided with a filler material.

12. Chip card according to claim 11,
**characterized in that**
the filler material is formed of a thermally activatable adhesive material.

13. Chip card according to any of the preceding claims,
**characterized in that**
a thermally activatable adhesive layer is provided between the substrate layers which form the connecting layers (11, 40, 48, 49) and the component layers (12, 13, 57, 58).

14. Method for producing a chip card having a chip (21) which is arranged in a card body (17), and having a plurality of components (18, 19, 22, 62) being electrically conductively connected to the chip by means of a conductor arrangement (20, 42, 47), according to one or more of claims 1 to 13,
**characterized in that**
in the production of the card body (17) in the form of a laminate structure having a plurality of component layers (12, 13, 57, 58) and connecting layers (11, 40, 48, 49) which are connected to one another in a laminate structure, the components are connected with one another via the connecting layers in such a manner that the connecting layers are laminated with a component layer that already contains the components, and in this process the electrical connections are produced by means of contacts being correspondingly disposed on top of one another, and cover layers (35) are applied onto the card body in another laminating step.

## Revendications

1. Carte à puce comprenant une puce (21) qui est agencée dans un corps de carte (17) et comprenant une pluralité de composants (18, 19, 22, 62) étant reliés de manière électriquement conductrice avec la puce au moyen d'un agencement de conducteurs (20, 42, 47),
**caractérisée en ce que**
le corps de carte est constitué d'une pluralité de couches de substrat (11, 12, 13, 40, 48, 49, 57, 58) étant reliées entre elles de manière plane dans un processus de laminage, et les composants et l'agencement de conducteurs sont agencés sur des couches de substrat différentes, spécifiquement un agencement en couches de composants et un agencement en couches de raccordement, et présentent des surfaces de contact (23, 24, 25, 26, 31, 32, 33, 34, 60, 65) étant disposées de sorte qu'elles se chevauchent afin d'établir un contact électriquement conducteur.

2. Carte à puce selon la revendication 1,
**caractérisée en ce que**
l'agencement en couches de raccordement présente une pluralité de couches de raccordement (48, 49), chacune étant dotée d'un module de conducteurs de raccordement (54, 55) de manière à ce que les modules de conducteurs de raccordement étant mis en contact l'un avec l'autre via des surfaces de contact forment l'agencement de conducteurs de raccordement.

3. Carte à puce selon l'une quelconque des revendications précédentes,
**caractérisée en ce que**
l'agencement en couches de raccordement (20, 42, 47) est muni d'un agencement en couches de composants étant constitué par une ou plusieurs couches de composants (12, 13, 57, 58) et étant muni d'un dispositif de sortie ou un dispositif d'entrée (18) ainsi qu'un dispositif d'alimentation en énergie (22) pour la puce (21).

4. Carte à puce selon la revendication 3,
**caractérisée en ce que**
le dispositif de sortie ou le dispositif d'entrée (18) sont agencés dans une première couche de composants (12) et le dispositif d'alimentation en énergie (22) est agencé dans une seconde couche de composants (13).

5. Carte à puce selon la revendication 4,
**caractérisée en ce que**
l'agencement en couches de raccordement (11, 40, 48, 49) est disposé entre les couches de composants (12, 13, 57, 58).

6. Carte à puce selon la revendication 4,
**caractérisée en ce que**
les couches de raccordement (11, 40, 48, 49) de l'agencement en couches de raccordement et les couches de composants (12, 13, 57, 58) de l'agencement en couches de composants sont disposées en alternance les unes sur les autres.

7. Carte à puce selon l'une quelconque des revendications précédentes,
**caractérisée en ce que**
les composants (18, 19, 21, 22, 62) sont disposés au moins partiellement en groupes de composants dans une couche de groupes de composants commune.

8. Carte à puce selon l'une quelconque des revendications précédentes,
**caractérisée en ce que**
les composants (18, 19, 21, 22, 62) sont disposés au moins partiellement en tant que composants individuels en des couches de composants individuels.

9. Carte à puce selon l'une quelconque des revendications précédentes,
**caractérisée en ce que**
les composants s'étendent au moins partiellement à travers plusieurs couches de composants adjacentes.

10. Carte à puce selon l'une quelconque des revendications précédentes,
**caractérisée en ce que**
les composants sont agencés dans des logements de composants étant formés d'au moins une embrasure de fenêtre qui est agencée dans une ou plusieurs couches de composants.

11. Carte à puce selon la revendication 10,
**caractérisée en ce que**
les embrasures de fenêtre sont munies d'un matériau de remplissage.

12. Carte à puce selon la revendication 11,
**caractérisée en ce que**
le matériau de remplissage est formé d'un matériau adhésif thermo-activable.

13. Carte à puce selon l'une quelconque des revendications précédentes,
**caractérisée en ce qu'**
une couche adhésive thermo-activable est pourvue entre les couches de substrat formant les couches de raccordement (11, 40, 48, 49) et les couches de composants (12, 13, 57, 58).

14. Procédé pour la fabrication d'une carte à puce comprenant une puce (21) étant agencée dans un corps de carte (17) et comprenant une pluralité de composants (18, 19, 22, 62) étant reliés de manière électriquement conductrice avec la puce au moyen d'un agencement de conducteurs (20, 42, 47) selon une ou plusieurs des revendications 1 à 13,
**caractérisée en ce que**
lors de la fabrication du corps de carte (17) en tant que structure laminée comprenant une pluralité de couches de composants (12, 13, 57, 58) et de couches de raccordement (11, 40, 48, 49) étant reliées entre elles dans une structure laminée, les composants sont reliés entre eux au moyen des couches de raccordement de telle manière que les couches de raccordement soient laminées avec une couche de composants déjà contenant les composants, et au cours de ce processus les connexions électriques sont réalisées au moyen de contacts étant disposés de manière correspondante les uns sur les autres, et dans une autre étape de laminage des couches de recouvrement (35) sont appliquées sur le corps de carte.
